# EUROPÄISCHE PATENTANMELDUNG

(11) **EP 2 192 461 A1**
(43) Veröffentlichungstag der Anmeldung: **02.06.2010**
(21) Anmeldenummer: 08020806.9
(22) Anmeldetag: 01.12.2008
(51) Int. Cl.: G05B 19/05

(54) **Steuerungsvorrichtung und System zur fehlersicheren Datenübertragung**

(71) Anmelder: Siemens Aktiengesellschaft, 80333 München (DE)
(72) Erfinder: Gentner, Friedrich, 91086 Aurachtal (DE)

(57) **Zusammenfassung**

Die vorliegende Erfindung betrifft eine Steuerungsvorrichtung (2) und ein System (1) zur fehlersicheren Datenübertragung. Insbesondere betrifft die vorliegende Erfindung eine Steuerungsvorrichtung (2) zur Steuerung einer Anlage oder Maschine, welche Standardkomponenten und fehlersichere Komponenten umfasst. Die Steuerungsvorrichtung (2) umfasst mindestens eine Schnittstelle (7) für einen Bus (4), der die Steuerungsvorrichtung (2) mit peripheren Vorrichtungen (3) verbindet. Eine erste speicherprogrammierbare Steuerung (6) der Steuerungsvorrichtung (2) steuert Standardoperationen mindestens einer der peripheren Vorrichtungen (3). Ferner steuert eine zweite speicherprogrammierbare Steuerung, welche eine fehlersichere speicherprogrammierbare Steuerung (5) ist, fehlersichere Operationen mindestens einer der peripheren Vorrichtungen (3).

## Beschreibung

Die vorliegende Erfindung betrifft eine Steuerungsvorrichtung und ein System zur fehlersicheren Datenübertragung. Insbesondere betrifft die vorliegende Erfindung eine Steuerungsvorrichtung zur Steuerung einer Anlage oder Maschine, welche Standardkomponenten und fehlersichere Komponenten umfasst.

Sicherheitstechnik soll Mensch und Maschine vor Gefahren schützen. Oft reicht es jedoch nicht, den Zugang zu Gefahrenbereichen durch bauliche Schutzeinrichtungen zu verhindern. Sobald manuelle Eingriffe im Gefahrenbereich von Maschinen vorgenommen werden müssen, sind zusätzliche Sicherheitsfunktionen erforderlich. Die klassische Sicherheitslösung ist das Stillsetzen der Maschine durch einfaches Trennen des Antriebs vom Netz in Verbindung mit mechanischen Vorrichtungen. Jedoch erfordert diese Lösung einen hohen Verdrahtungs-, Schaltungs- und Überwachungsaufwand.

Moderne Lösungen integrieren die Sicherheitstechnik in den Antrieb und erlauben damit die Realisierung komfortabler und flexibler Sicherheitsfunktionen, vereinfachen Sicherheitskonzepte und sorgen für höhere Zuverlässigkeit bei schnellerer Reaktionszeit. Denn Sicherheitstechnik, die in die Standardautomatisierung integriert ist, bedeutet deutlich weniger Engineeringaufwand und höhere Verfügbarkeit. Solch eine integrierte Sicherheitstechnik wird üblicherweise durch fehlersichere Steuerungen erreicht, welche als separate Module in Steuerungssysteme für Anlagen und Maschinen eingebaut werden und auf fehlersichere Anlagen- oder Maschinenkomponenten zugreifen können. Fehlersichere Komponenten sind beispielsweise Einrichtungen, welche den Schutz eines Bedieners sicherstellen. Dabei bezeichnet der Begriff "fehlersicher" (Englisch: fail-safe) gemäß DIN V VDE 0801 bzw. VDI/VDE 3542 die Fähigkeit eines Systems, beim Auftreten eines Ausfalls im sicheren Zustand zu bleiben oder unmittelbar in einen sicheren Zustand überzugehen. Synonym werden auch die Begriffe "sicherheitsgerichtet" oder "sicher" verwendet.

Insbesondere sorgen fehlersichere Steuerungen für ein durchgängiges, effizientes Sicherheitskonzept in Anlagen oder Maschinen mit erhöhten Sicherheitsanforderungen und erreichen üblicherweise einen Sicherheitslevel SIL 2 bis SIL 3 nach IEC 61508.

Die Vergangenheit hat jedoch gezeigt, dass nicht nur die Anforderungen an die Sicherheitstechnik gestiegen sind. So müssen Standardkomponenten moderner Maschinen und Anlagen immer komplexere Funktionen durchführen, beispielsweise in Bezug auf die Bewegungsführung einzelner Anlagen- und Maschinenkomponenten. Allerdings führt diese erhöhte Komplexität zu einem erhöhten Hardwareaufwand. Außerdem ist der Aufwand, die Fehlersicherheit solch komplexer Systeme nachzuweisen, sehr hoch, für einzelne Maschinen und Anlagen zu hoch.

Aus der EP 1 043 640 A2 ist ein fehlersicheres Automatisierungssystem mit Standard CPUs und Standard Peripheriebaugruppen bekannt, bei dem ein oder mehrere Kommunikationskanäle zwischen den CPUs und den Peripheriebaugruppen vorgesehen sind.

Aus der EP 1 596 262 B1 ist ein System zur sicherheitsgerichteten Übertragung von Daten bekannt, mit mindestens einer einkanaligen Komponente, welche zur sicherheitsgerichteten Übertragung von Daten dadurch ertüchtigt ist, dass sie über einen Bus an eine sicherheitsgerichtete Rechnereinheit angeschlossen ist.

Bei den herkömmlichen Systemen besteht jedoch das Problem, dass insbesondere die sicherheitsgerichtete Übertragung von Daten eine umfangreiche Verkabelung erfordert und somit einen komplizierten Gesamtaufbau zur Folge hat. Beispielsweise wird in herkömmlichen Systemen eine fehlersichere Steuerung derart mit Antriebsobjekten einer Anlage oder Maschine verbunden, dass zwischen den Antriebsobjekten und der fehlersicheren Steuerung eine Antriebsobjektsteuerung vorgesehen ist, so dass die Antriebsobjekte und die fehlersichere Steuerung in unterschiedlichen Subnetzen angeordnet sind und die Antriebsobjektsteuerung einen Netzübergang zwischen diesen Subnetzen bildet.

Der Erfindung liegt demgegenüber die Aufgabe zu Grunde eine fehlersichere Datenübertragung mit reduziertem Hardwareaufwand zu ermöglichen.

Die der Erfindung zu Grunde liegende Aufgabe wird mit den Merkmalen der unabhängigen Patentansprüche gelöst. Bevorzugte Ausführungsformen der Erfindung sind in den abhängigen Patentansprüchen angegeben.

Durch die Erfindung werden eine Steuerungsvorrichtung und ein System zur fehlersicheren Datenübertragung geschaffen, wobei in der Steuerungsvorrichtung eine erste speicherprogrammierbare Steuerung, welche Standardoperationen mindestens einer peripheren Vorrichtung steuert, und eine zweite, fehlersichere speicherprogrammierbare Steuerung, welche fehlersichere Operationen mindestens einer peripheren Vorrichtung steuert, kombiniert werden. Dabei ist mindestens eine periphere Vorrichtung vorzugsweise Bestandteil des Systems zur fehlersicheren Datenübertragung, welches mindestens eine Steuerungsvorrichtung umfasst.

Entgegen herkömmlicher Systeme ist erfindungsgemäß somit lediglich eine Steuerungsvorrichtung vorgesehen, um sowohl Standardoperationen als auch fehlersichere Operationen zu steuern. Mit anderen Worten kann die erfindungsgemäße Steuerungsvorrichtung sowohl für die Sicherheitstechnik als auch für die restliche Automatisierungstechnik eingesetzt werden. Dies wird dadurch erreicht, dass die Steuerungsvorrichtung sowohl eine speicherprogrammierbare Steuerung zur Steuerung von Standardoperationen (Automatisierungstechnik) als auch eine fehlersichere speicherprogrammierbare Steuerung zur Steuerung fehlersicherer Operationen (Sicherheitstechnik) umfasst. Somit kann eine erfindungsgemäße Steuerungsvorrichtung deutlich günstiger hergestellt werden als eine herkömmliche Steuerungsvorrichtung, welche separate Steuerungsvorrichtungen vorsieht und dadurch einen höheren Hardware- und Engineeringaufwand erfordert. Ferner muss ein Programm für eine Anlagensteuerung nicht weiterhin auf zwei Steuerungsvorrichtungen verteilt werden sondern kann in einer einzigen Steuerungsvorrichtung implementiert sein.

Darüber hinaus, da gemäß der vorliegenden Erfindung die erste speicherprogrammierbare Steuerung und die zweite, fehlersichere speicherprogrammierbare Steuerung in der gleichen Steuerungsvorrichtung verbaut sind, lassen sich sicherheitsgerichtete Programme und Standard-Programme mit den gleichen Engineering-Tools erstellen und verwalten. Somit wird erfindungsgemäß eine bessere Systemintegration ermöglicht, da das Engineering für den Standard- und den sicherheitsgerichteten Steuerungsteil zentralisiert ist. Dies hat zusätzlich eine Kostenreduzierung sowohl bei der Erstellung als auch bei der Wartung zur Folge.

Außerdem kann die erfindungsgemäße Steuerungsvorrichtung als einzelne Baugruppe angeboten werden, wohingegen bisher eine Mehrzahl von Baugruppen angeboten werden musste. Dadurch reduziert sich für Kunden der Aufwand für Bestellung, Verkabelung und Anlagenaufbau. Insbesondere haben Kunden nur noch ein Projekt mit einem Programm, wodurch der Aufwand für die separate Programmierung der einzelnen Steuerungsteile und der Kommunikation zwischen diesen Teilen wegfällt. Die Gesamtkomplexität reduziert sich somit erheblich und Wartbarkeit und Erweiterbarkeit vereinfachen sich wesentlich.

Gemäß einer Ausführungsform der vorliegenden Erfindung umfasst die Steuerungsvorrichtung einen Prozessor, welcher eingerichtet ist, um Operationen der ersten und der zweiten speicherprogrammierbaren Steuerung zu verarbeiten. Dadurch kann eine Steuerungsvorrichtung mit nur einem Prozessor für Standard- und fehlersichere Automatisierungen realisiert werden, was allerdings die Koexistenz eines Standard- und eines fehlersicheren Programms auf einem Prozessor (z.B. CPU) erfordert. Dies ermöglicht, eine herkömmliche speicherprogrammierbare Steuerung für Standardoperationen ohne zusätzlichem Hardwareaufwand mit Sicherheitstechnik zu erweitern, indem auch die Software für fehlersichere Operationen darin implementiert und durch den bereits vorhandenen Prozessor ausgeführt wird. Folglich können Komponenten eingespart werden, was neben einem reduzierten Hardwareaufwand auch eine Kostensenkung mit sich bringt.

Gemäß einer dazu alternativen Ausführungsform der Erfindung umfasst die Steuerungsvorrichtung mindestens zwei Prozessoren, welche eingerichtet sind, um Operationen der ersten und der zweiten speicherprogrammierbaren Steuerung separat zu verarbeiten. Diese Variante ist insbesondere dann von Vorteil, wenn die erste speicherprogrammierbare Steuerung komplexe Operationen verarbeiten muss, beispielsweise eine komplexe Bewegungsführung eines zu steuernden Antriebsobjekts einer Anlage oder Maschine. Manche herkömmlichen Steuerungsvorrichtungen zum Ausführen von Standardoperationen umfassen bereits zwei Prozessoren, so dass eine solche Steuerungsvorrichtung lediglich mit der Software einer fehlersicheren speicherprogrammierbaren Steuerung erweitert werden muss. Anderenfalls muss die Steuerungsvorrichtung mit einem zusätzlichen Prozessor ausgestattet werden, welcher die fehlersicheren Operationen ausführt.

Unabhängig von der Anzahl von Prozessoren für Standardoperationen und fehlersichere Operationen wird die Logik der Sicherheitsfunktionen via Software realisiert, wodurch Flexibilität erreicht wird. In herkömmlichen Systemen ist die fehlersichere speicherprogrammierbare Steuerung über einen Bus, also mittels Verdrahtung, mit einer speicherprogrammierbaren Steuerung für Standardoperationen verbunden, was einen erhöhten Hardwareaufwand bedeutet. Die erfindungsgemäße Softwarelösung ist einfacher änderbar, erweiterbar und dokumentierbar. Ferner wird erfindungsgemäß die Realisierung komplexer Sicherheitsfunktionen in einer Steuerungsvorrichtung ermöglicht, welche herkömmlich nur Standardoperationen ausgeführt hat, wie z.B. die Steuerung einer Bewegungsführung eines Antriebsobjekts in einer Anlage oder Maschine. Vorzugsweise werden diese Standardoperationen auch gemäß der vorliegenden Erfindung separat von fehlersicheren Operationen gesteuert, jedoch durch eine einzige Steuerungsvorrichtung, welche separate Steuerungen für die jeweiligen Operationen umfasst.

Gemäß einer weiteren Ausführungsform der vorliegenden Erfindung kommuniziert die zweite, fehlersichere speicherprogrammierbare Steuerung über den Bus mit der mindestens einen peripheren Vorrichtung, mittels eines Profils, welches vorgegebene Sicherheitsanforderungen erfüllt. Ist der Bus beispielsweise ein PROFIBUS, der später beschrieben wird, so kann die Kommunikation zwischen der fehlersicheren speicherprogrammierbaren Steuerung der Steuerungsvorrichtung und einer zugeordneten fehlersicheren peripheren Vorrichtung mittels des PROFsafe-Profils erfolgen. Somit kann der Bus, welcher die Steuerungsvorrichtung mit peripheren Vorrichtungen verbindet, sowohl für eine Standardkommunikation als auch für eine fehlersichere Kommunikation eingesetzt werden.

Gemäß einer weiteren Ausführungsform der vorliegenden Erfindung ist die zweite, fehlersichere speicherprogrammierbare Steuerung entsprechend einem Sicherheitsstandard zertifiziert (z.B. vom TÜV abgenommen), um so eine gewünschte Sicherheitsklasse zu erreichen. Insbesondere kann der gesamte fehlersichere Kommunikationsteil des erfindungsgemäßen Systems entsprechend einem Sicherheitsstandard zertifiziert sein, beispielsweise entsprechend SIL 2 bis SIL 3 nach IEC 61508, um eine hinreichende Reduzierung systematischer Fehler zu erreichen. Vorzugsweise steuert die zweite, fehlersichere speicherprogrammierbare Steuerung dann ausschließlich fehlersichere der peripheren Vorrichtungen. Dadurch kann auch bei einer späteren Änderung der Standardoperationen erreicht werden, dass die fehlersichere speicherprogrammierbare Steuerung nicht erneut zertifiziert werden muss, da diese von einer Änderung der Standardoperationen unberührt bleibt. Mit anderen Worten kann die zweite, fehlersichere speicherprogrammierbare Steuerung als in sich abgeschlossener Softwarebaustein betrachtet werden, welcher einmalig zertifiziert wird und auch bei einer Änderung anderer Komponenten der Steuerungsvorrichtung nicht erneut zertifiziert werden muss.

Die fehlersichere speicherprogrammierbare Steuerung wird beispielsweise durch ein fehlersicheres Programm für fehlersichere Operationen realisiert, welches sicherstellt, dass, wenn sich Personen im Gefahrenbereich einer Maschine oder Anlage befinden, alle Antriebe im sicheren Stopp bleiben. Einem "unsicheren" Programm, wodurch eine speicherprogrammierbare Steuerung für Standardoperationen realisiert wird, kann das fehlersichere Programm einen solchen Zustand über ein Bit in einem Datenbaustein anzeigen. Sobald das fehlersichere Programm sicher feststellt, dass für die Personen keine Gefahr mehr gegeben ist, kann es den Produktivbetrieb auf die gleiche Weise wieder freigeben. Das Programm für den Produktivbetrieb muss dann nicht zertifiziert werden, kann aber in der gleichen Steuerungsvorrichtung laufen. Das heißt, nicht fehlersichere Teile der Steuerungsvorrichtung müssen nicht zertifiziert werden. Wird die erfindungsgemäße Steuerungsvorrichtung beispielsweise zur Steuerung einer Stanze eingesetzt, so müssen wie oben erwähnt insbesondere solche Funktionen fehlersicher sein, welche Personenschäden verhindern. Im Falle einer Stanze kann dies zum Beispiel eine Lichtschranke sein, welche verhindern soll, dass ein Benutzer im Stanzbetrieb seine Finger in den Stanzbereich einbringt. Andere Funktionen, wie beispielsweise die eigentliche Bewegung der Stanze (Standardoperationen), müssen dabei nicht fehlersicher sein.

Nachfolgend werden bevorzugte Ausführungsbeispiele der Erfindung mit Bezugnahme auf die Zeichnung näher erläutert.

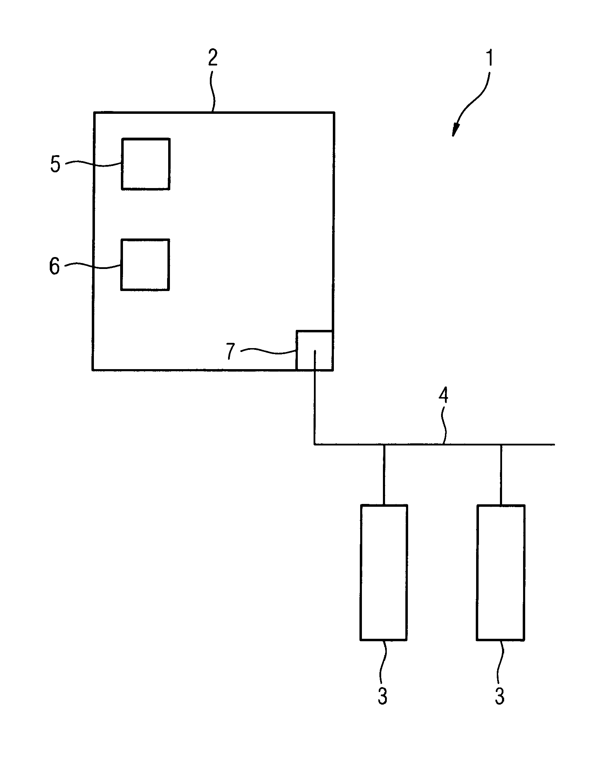

- FIG 1: zeigt ein System zur fehlersicheren Datenübertragung, umfassend eine Steuerungsvorrichtung gemäß einem Ausführungsbeispiel der vorliegenden Erfindung und zwei zu steuernde Vorrichtungen.

FIG 1 zeigt ein System 1 zur fehlersicheren Datenübertragung, umfassend eine Steuerungsvorrichtung 2 gemäß einem Ausführungsbeispiel der vorliegenden Erfindung und zwei zu steuernde Vorrichtungen 3. Die Steuerungsvorrichtung 2 und die zwei zu steuernden Vorrichtungen 3 sind durch einen Bus 4 miteinander verbunden.

Gemäß dem Ausführungsbeispiel ist der Bus 4 ein PROFIBUS, wobei eine fehlersichere Kommunikation zwischen einer fehlersicheren speicherprogrammierbaren Steuerung 5 der Steuerungsvorrichtung 2 und einer fehlersicheren der zu steuernden Vorrichtungen 3 mittels des PROFIsafe-Profils für den Feldbus-Standard PROFIBUS DP (dezentrale Peripherie) erfolgt. Dieses Profil erfüllt die Sicherheitsanforderungen nach IEC 61508. Dabei sind sowohl eine fehlersichere als auch eine Standard-Kommunikation über ein einziges Kabel möglich. PROFIsafe erweitert PROFIBUS zu einem Sicherheitsbus, welcher die hohen Anforderungen der Prozess- und Fertigungstechnik abdeckt. Insbesondere wird durch das vorgeschlagene System eine fehlersichere Kommunikation gemäß dem Sicherheitslevel SIL 3 nach IEC 61508 erreicht und der fehlersichere Kommunikationsteil des Systems kann entsprechend dem Sicherheitslevel zertifiziert werden, beispielsweise durch den TÜV (gemäß IEC 61508 bzw. EN 61508). Da die fehlersichere speicherprogrammierbare Steuerung 5 der Steuerungsvorrichtung 2 gemäß dem Ausführungsbeispiel alle fehlersicheren Operationen übernimmt, eignet sich die erfindungsgemäße Steuerungsvorrichtung 2 zur Steuerung in einem System 1 mit dezentralem Peripherieaufbau, das heißt mit Standard- und sicherheitsgerichteten Peripheriemodulen. Da die Bewegungsführung von Standardvorrichtungen unabhängig von der Steuerung fehlersicherer Vorrichtungen erfolgt, muss eine entsprechende speicherprogrammierbare Steuerung 6 für Standardoperationen auch nicht zertifiziert werden.

Die oben beschriebene fehlersichere Kommunikation zwischen der fehlersicheren programmierbaren Steuerung 5 und einer fehlersicheren der peripheren Vorrichtungen 3 war früher nur möglich, wenn solch eine fehlersichere Peripherievorrichtung zwei Mikrocontroller umfasste, um eine Kontrolle der fehlersicheren Kommunikation durchzuführen und Kontrollergebnisse auf ihre Konsistenz zu prüfen. Aus der EP 1 596 262 B1 (Patentinhaber: Siemens AG) ist jedoch eine verbesserte Lösung bekannt, welche nur einen Mikrocontroller erfordert. In dem hier beschriebenen Ausführungsbeispiel ist die mindestens eine fehlersichere Peripherievorrichtung vorzugsweise entsprechend der Lösung der EP 1 596 262 B1 aufgebaut. Dadurch kann ein vorgegebener Sicherheitslevel, beispielsweise SIL 2 bis SIL 3 nach IEC 61580, der üblicherweise in der Prozessindustrie gefordert ist, auch dann erreicht werden, wenn eine fehlersichere Peripherievorrichtung mit nur einem Mikrocontroller ausgestattet ist.

Um vorgegebene Sicherheitsanforderungen zu erfüllen, muss das System 1 im fehlersicheren Betrieb insbesondere gewährleisten, dass zumindest folgende Fehler innerhalb einer Fehlertoleranzzeit erkannt werden und eine bestimmungsgemäße sicherheitsgerichtete Reaktion eingeleitet wird: Adressverfälschung, Wiederholung, Verlust, Einfügung, falsche Abfolge, Verfälschung der Information, Verzögerung. Dabei können die Fehler entweder durch die entsprechende Peripherievorrichtung oder durch die fehlersichere speicherprogrammierbare Steuerung 5 erkannt werden.

Gemäß einem bevorzugten Ausführungsbeispiel wird die fehlersichere speicherprogrammierbare Steuerung 5 in eine herkömmliche Steuerungsvorrichtung integriert, welche bereits die speicherprogrammierbare Steuerung 6 für Standardoperationen umfasst. Beispielsweise ist eine solche herkömmliche Steuerungsvorrichtung zur Steuerung verkoppelter Bewegungsabläufe mehrerer Achsen einer Antriebsvorrichtung geeignet. Dabei ermöglicht die Steuerungsvorrichtung neben lagegeregelter Einzelachspositionierung vor allem auch komplexe, synchronisierte Bewegungsabläufe, z.B. Getriebegleichlauf, Kurvengleichlauf und Druckmarkenkorrektur. Die Gleichlaufachsen können an einen virtuellen oder realen Master gekoppelt werden. Der taktsynchrone PROFIBUS ermöglicht die Ansteuerung der Achsen über ein digitales Bussystem, wobei der Bus 4 an eine Schnittstelle 7 der erfindungsgemäßen Steuerungsvorrichtung 2 angeschlossen ist. Die Steuerungsvorrichtung 2 kann eine weitere Schnittstelle (nicht gezeigt) umfassen, beispielsweise eine zweite PROFIBUS DP-Schnittstelle, um eine komfortable Parametrierung und Inbetriebnahme der Antriebe von einem Computer (nicht gezeigt) aus vorzunehmen, der über diese weitere Schnittstelle (nicht gezeigt) mit der Steuerungsvorrichtung 2 verbunden ist.

Anwendung findet eine hier beschriebene Steuerungsvorrichtung 2 beispielsweise in Verarbeitungs-/Montagelinien, Etikettiermaschinen, Kartonaufrichtern, Palletierern, Durchlaufmaschinen und fliegenden Scheren.

Die in der Steuerungsvorrichtung 2 implementierte Software ist dafür ausgelegt, um verschiedenste Einstellungen vorzunehmen. So kann sie der Parametrierung von Technologieobjekten dienen, z.B. Achse, Kurvenscheibe, Nocke, Messtaster, wobei keine spezielle Programmiersprache erforderlich ist. Insbesondere lassen sich über die Software der Steuerungsvorrichtung 2 alle Bewegungsabläufe der zu steuernden Peripherievorrichtungen 3 und alle Sicherheitseinstellungen für fehlersichere der zu steuernden Peripherievorrichtungen 3 definieren und einrichten.

## Patentansprüche

1. Steuerungsvorrichtung (2), umfassend:
- mindestens eine Schnittstelle (7) für einen Bus (4), der die Steuerungsvorrichtung (2) mit peripheren Vorrichtungen (3) verbindet, und
- eine erste speicherprogrammierbare Steuerung (6), welche Standardoperationen mindestens einer der peripheren Vorrichtungen (3) steuert,
**gekennzeichnet durch**
- eine zweite speicherprogrammierbare Steuerung, welche eine fehlersichere speicherprogrammierbare Steuerung (5) ist und welche fehlersichere Operationen mindestens einer der peripheren Vorrichtungen (3) steuert.

2. Steuerungsvorrichtung (2) nach Anspruch 1, des Weiteren umfassend einen Prozessor, welcher eingerichtet ist, um Operationen der ersten und der zweiten speicherprogrammierbaren Steuerung (5, 6) zu verarbeiten.

3. Steuerungsvorrichtung (2) nach Anspruch 1, des Weiteren umfassend mindestens zwei Prozessoren, welche eingerichtet sind, um Operationen der ersten und der zweiten speicherprogrammierbaren Steuerung (5, 6) separat zu verarbeiten.

4. Steuerungsvorrichtung (2) nach einem der vorhergehenden Ansprüche, wobei die zweite, fehlersichere speicherprogrammierbare Steuerung (5) über den Bus (4) mit der mindestens einen peripheren Vorrichtung (3) kommuniziert, mittels eines Profils, welches vorgegebene Sicherheitsanforderungen erfüllt.

5. Steuerungsvorrichtung (2) nach einem der vorhergehenden Ansprüche, wobei die zweite, fehlersichere speicherprogrammierbare Steuerung (5) entsprechend einem Sicherheitsstandard zertifiziert ist.

6. Steuerungsvorrichtung (2) nach einem der vorhergehenden Ansprüche, wobei die erste speicherprogrammierbare Steuerung (6) zur Steuerung einer Bewegungsführung von Antriebsobjekten in der mindestens einen peripheren Vorrichtung (3) eingerichtet ist.

7. System (1), umfassend mindestens eine zu steuernde Vorrichtung (3) und mindestens eine Steuerungsvorrichtung (2) nach einem der vorhergehenden Ansprüche.

8. System (1) nach Anspruch 7, wobei die mindestens eine zu steuernde Vorrichtung (3) ein Antriebsobjekt einer Anlage oder Maschine ist, dessen Bewegungsführung durch die erste speicherprogrammierbare Steuerung (6) steuerbar ist.

9. System (1) nach Anspruch 7 oder 8, wobei die mindestens eine zu steuernde Vorrichtung (3) und die mindestens eine Steuerungsvorrichtung (2) über einen Bus (4) miteinander verbunden sind, welcher sowohl für eine fehlersichere als auch für eine Standard-Kommunikation eingerichtet ist.

10. System (1) nach einem der Ansprüche 7 bis 10, umfassend Standardvorrichtungen und fehlersichere Vorrichtungen, welche durch eine entsprechende Steuerung der Steuerungsvorrichtung (2) steuerbar sind.

## Geänderte Patentansprüche

### Geänderte Patentansprüche gemäss Regel 137(2) EPÜ.

**1.** Steuerungsvorrichtung (2) mit peripheren Vorrichtungen, umfassend:
- mindestens eine Schnittstelle (7) für einen Bus (4), der die Steuerungsvorrichtung (2) mit den peripheren Vorrichtungen (3) verbindet, und
- eine erste speicherprogrammierbare Steuerung (6), welche Standardoperationen mindestens einer der peripheren Vorrichtungen (3) steuert,
**gekennzeichnet durch**
- eine zweite speicherprogrammierbare Steuerung, welche eine fehlersichere speicherprogrammierbare Steuerung (5) ist und welche fehlersichere Operationen mindestens einer der peripheren Vorrichtungen (3) steuert, und
- eine sicherheitsgerichtete Rechnereinheit, welche eine Telegrammwiederholung, einen Telegrammverlust, eine Telegrammeinfügung, eine falsche Abfolge der Telegramme, eine Verfälschung von Nutzdaten, eine Verzögerung von Telegrammen, eine Kopplung von sicherheitsrelevanten und Standard-Nachrichten und einen Adressierfehler erkennt.

**2.** Steuerungsvorrichtung (2) nach Anspruch 1, des Weiteren umfassend einen Prozessor, welcher eingerichtet ist, um Operationen der ersten und der zweiten speicherprogrammierbaren Steuerung (5, 6) zu verarbeiten.

**3.** Steuerungsvorrichtung (2) nach Anspruch 1, des Weiteren umfassend mindestens zwei Prozessoren, welche eingerichtet sind, um Operationen der ersten und der zweiten speicherprogrammierbaren Steuerung (5, 6) separat zu verarbeiten.

**4.** Steuerungsvorrichtung (2) nach einem der vorhergehenden Ansprüche, wobei die zweite, fehlersichere speicherprogrammierbare Steuerung (5) über Kommunikationsmittel verfügt, wobei die Kommunikationsmittel dazu ausgebildet sind, um über den Bus (4) mit der mindestens einen peripheren Vorrichtung (3), mittels eines Profils, welches vorgegebene Sicherheitsanforderungen erfüllt, zu kommunizieren, wobei das Profil die Kommunikation zwischen der fehlersicheren speicherprogrammierbaren Steuerung und einer zugeordneten fehlersicheren peripheren Vorrichtung ermöglicht.

**5.** Steuerungsvorrichtung (2) nach einem der vorhergehenden Ansprüche, wobei die erste speicherprogrammierbare Steuerung (6) über Steuerungsmittel verfügt, wobei die Steuerungsmittel für eine Bewegungsführung von Antriebsobjekten in der mindestens einen peripheren Vorrichtung (3) ausgebildet sind.

**6.** System (1), umfassend mindestens eine zu steuernde Vorrichtung (3) und mindestens eine Steuerungsvorrichtung (2) nach einem der vorhergehenden Ansprüche.

**7.** System (1) nach Anspruch 6, wobei die mindestens eine zu steuernde Vorrichtung (3) ein Antriebsobjekt einer Anlage oder Maschine ist, dessen Bewegungsführung durch die Steuerungsmittel der ersten speicherprogrammierbaren Steuerung (6) steuerbar ist.

**8.** System (1) nach Anspruch 6 oder 7, wobei die mindestens eine zu steuernde Vorrichtung (3) und die mindestens eine Steuerungsvorrichtung (2) über einen Bus (4) miteinander verbunden sind, wobei der Bus über Kommunikationsmittel verfügt, wobei die Kommunikationsmittel sowohl für eine fehlersichere als auch für eine Standard-Kommunikation ausgebildet sind.

**9.** System (1) nach einem der Ansprüche 6 bis 9, umfassend Standardvorrichtungen und fehlersichere Vorrichtungen, welche durch eine entsprechende Steuerung der Steuerungsvorrichtung (2) steuerbar sind.
